# EUROPEAN PATENT SPECIFICATION

(11) **EP 2 351 139 B1**
(45) Date of publication and mention of the grant of the patent: **09.10.2013**
(21) Application number: 09744261.0
(22) Date of filing: 13.10.2009
(51) Int. Cl.: H01M 10/0525, H01M 4/485, H01M 4/505, H01M 4/525, H01M 4/131, H01M 4/36

(54) **MIXED LITHIUM NICKEL COBALT OXIDE AND LITHIUM NICKEL MANGANESE COBALT OXIDE CATHODES**
GEMISCHTES LITHIUM-NICKEL-KOBALT-OXID UND LITHIUM-NICKEL-MANGAN-KOBALT-OXID-KATHODEN
CATHODES MIXTES D OXYDE DE COBALT-NICKEL-LITHIUM ET D OXYDE DE COBALT-MANGANÈSE-NICKEL-LITHIUM

(30) Priority: 13.10.2008 US 104837 P
(43) Date of publication of application: 03.08.2011
(73) Proprietor: BASF Corporation, Florham Park, NJ 07932 (US)
(72) Inventor: LAMPERT, K., Jordan, Metuchen, NJ 08840 (US); DICARLO, Joseph, Groton, CT 06340-277 (US); BRAMNIK, Kirill, Jersey City, NJ 07310 (US); CHINTAWAR, Prashant, Hillsborough, NJ 08844 (US)
(74) Representative: Altmann, Andreas
(86) International application number: PCT/US2009/060462
(87) International publication number: WO 2010/045203

(56) References cited:
- EP-A1- 1 808 918
- WO-A1-2009/038037
- JP-A- 2001 035 492
- JP-A- 2004 047 449
- JP-A- 2007 317 539
- US-A1- 2002 192 552
- US-A1- 2006 233 696

## Description

### FIELD OF THE INVENTION

The present Invention relates to a positive electrode material which is a blended combination of lithium nickel cobalt oxide (and aluminium substituted compounds thereof) and lithium nickel manganese cobalt oxide, that may be used In a non-aqueous electrolyte lithium secondary battery.

### BACKGROUND OF THE INVENTION

Lithium nickel cobalt oxide (LNCO) is a well known lithium ion battery (UB) cathode material. Its attributes are high specific capacity, measured In units of Coulombs/g, or, more commonly, Ah/kg, and high rate (power) capability. However, LNCO at temperatures of approximately 200°C or higher, and when in the charged state, can oxidize the organic electrolyte in an LIB cell, resulting in thermal runaway or degradation of the battery components. This undesirable oxidation is due to the release of oxygen from the Ni⁴⁺ and Co⁴⁺ oxides In the structure of the charged cathode and from NiO on the surface of the crystallites.

The overall safety of an LIB is an issue of cell design and/or battery pack design. Safety in an LIB design can be influenced by choices among electrolyte, separator, anode, and cell overcharge protection circuitry. However, for consumer electronics such as cell phones and laptop computers, which require high energy cells, and handheld power tools, which require high energy and power cells, LNCO has not.been used due to concerns over thermal runaway as discussed. If a way could be found to utilize commercially available LNCO In an LIB by enhancing thermal stability, this would represent a useful contribution to the art.

Lithium nickel manganese cobalt oxide (LNMCO) has the same crystallographic structure (03) as LNCO, that is, layered. The addition of manganese to the metal slab layer in the material Increases the safety of the material by decreasing the amount of oxygen released during thermal decomposition. In addition, when additional "excess" lithium is added (*i.e.* lithium that occupies sites in the metal slab), the material is further stabilized by creating a highly stable Li₂MnO₃ (lithium manganite)-like rock salt structure within the material. At charging voltages typically used in LIB's (≤ 4.4V), LNMCO materials have lower specific capacity than LNCO materials.

Cathode materials derived from lithium manganese oxide spinel (LiMn₂O₄) and LNCO are known. However, the resulting spinel-type structures are not layered, and contain relatively high amounts of manganese.

LNMCO, Its addition derivatives, and LNCO materials all have a layered structure or a tunnel structure capable of absorbing or desorbing (intercalating or deintercalating) lithium ions in a reversible manner. If a way could be found to combine LNCMO and LNCO in a blend that retained relatively high specific capacity while enhancing thermal stability of the cathode-electrolyte system, this would also represent a useful contribution to the art.
JP2007317539 discloses a blend of LNCO with LiFePO₄ or a blend of LNMCO and LiFePO₄.

Furthermore, non-aqueous electrolyte secondary batteries comprising a lithium negative electrode are highly promising as the power source for driving cordless electronic or electric appliances because they generate a high voltage, providing high energy density. However, In order to satisfy a recent demand for high energy density, it is necessary to obtain a higher capacity. Thus, a need exists for Improved battery designs incorporating stable active positive electrode materials that can be used in secondary LIB's.

### BRIEF SUMMARY OF THE INVENTION

In one embodiments, the present Invention describes a positive electrode active material blend comprising
*x*LNMCO(1-*x*)LNM¹O where 0<*x*<1 and M¹ is at least one of Co or Al;
wherein LNMCO is Li_{(1+*y*)}M²_{(1-*y*)}O₂ where 0≤*y*≤0.9 and M² = Mn*ₐ*Ni*_{b}*Co*_{c}* where *a*+*b*+*c* = 1 and (1+*y*)/(1-*y*) -1 ≤*a*≤1 and 0<*b*/*c*≤100; and
wherein LNM¹O is selected from the group consisting of LiNlₒCoₑO₂ where *d*+*e* =1 and 0<*d*/*e*≤100; and LiNi₁₋(_{*z*+*z*)}Co*_{z}*Al*_{z'}*O₂ where 0< *z*+*z'*<1.

In another embodiment, the present invention provides a non-aqueous electrolyte lithium secondary battery comprising a positive electrode, a negative electrode, and a non-aqueous electrolyte, wherein the positive electrode comprises a blend *x*LNMCO(1-*x*)LNM¹O where 0<*x*<1 and M¹ is at least one of Co or Al;
wherein LNMCO is Li_{(1+*y*)}M²_{(1-*y*)}O₂ where 0≤*y*≤0.9 and M² = Mn*ₐ*Ni*_{b}*Co*_{c}* where *a*+*b*+*c* =1 and (1+*y*)/(1-*y*) -1 ≤*a*≤1 and 0<*b*/*c*≤100; and
wherein LNM¹O is selected from the group consisting of LiNi_{d}CoₑO₂ where *d*+*e* =1 and 0<*d*/e≤100; and LiNi_{*1*-(*z*+*z'*)}Co*_{z}*Al*_{z'}*O₂ where 0< *z*+*z'*<1.

### BRIEF DESCRIPTION OF THE DRAWINGS

FIG. 1 depicts a cycling voltage profile over time for a coin cell embodiment having an active cathode material comprising LMNCO.

FIG. 2 depicts a cycling voltage profile over time for an alternative coin cell embodiment having an active cathode material comprising a 76/25 weight-weight blend of LMNCO and LNCO-1.

FIG. 3 depicts a cycling voltage profile over time for an alternative coin cell embodiment having an active cathode material comprising a 25/75 weight-weight blend of LMNCO and LNCO-1.

FIG. 4 depicts a cycling voltage profile over time for a comparative coin cell having an active cathode material comprising LNCO-1.

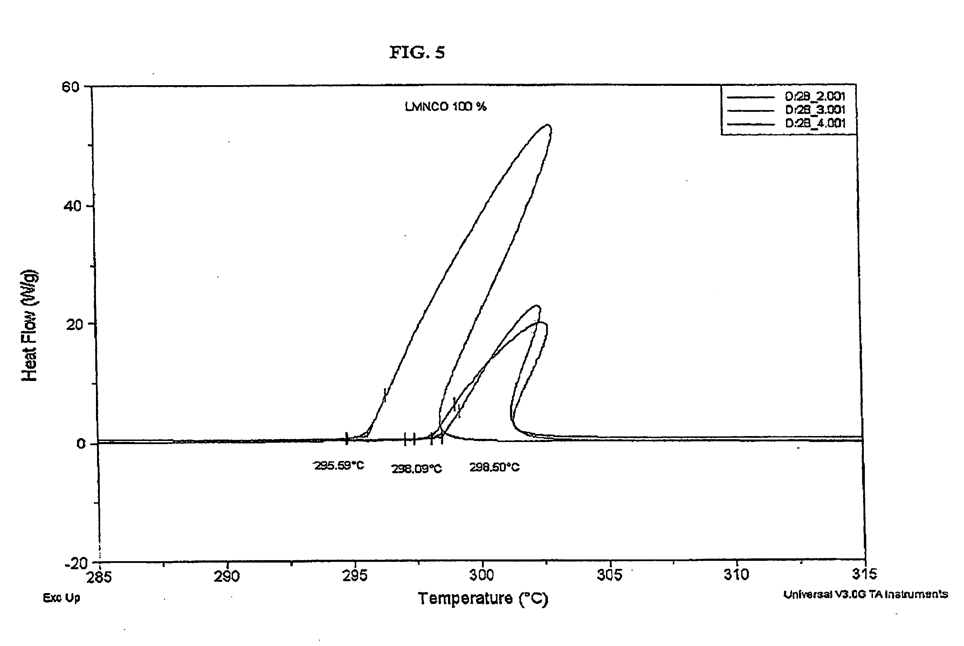

FIG. 5 depicts a DSC curve plotting heat flow versus temperature for the active cathode material comprising LMNCO, isolated from the coin cell embodiment of FIG. 1.

FIG. 6 depicts a DSC curve plotting heat flow versus temperature for the active cathode material comprising a 75/25 weight-weight blend of LMNCO and LNCO-1, Isolated from the coin cell embodiment of FIG. 2.

FIG. 7 depicts a DSC curve plotting heat flow versus temperature for the active cathode material comprising a 25/75 weight-weight blend of LMNCO and LNCO-1, isolated from the coin cell embodiment of FIG. 3.

FIG. 8 depicts a DSC curve plotting heat flow versus temperature for the active cathode material comprising LNCO-1, isolated from the coin cell embodiment of FIG. 4.

### DETAILED DESCRIPTION OF THE INVENTION

The present invention provides positive electrode materials for use In a battery which are a blended combination of lithium nickel cobalt oxide (and aluminum substituted compounds thereof) and lithium nickel manganese cobalt oxide, that may be used In a non-aqueous electrolyte lithium secondary battery.

### Definitions

The term "cycle" refers to a combined charge one-half cycle and a discharge one-half cycle, whereby the cell or battery takes In and stores electrical energy in a charge one-half cycle and releases electrical energy in a discharge one-half cycle.

The term "cathode" refers to an electrode containing a compatible cathodic material which functions as a positive pole (cathode) In a secondary electrolytic cell and which is capable of being recharged (recycled).

The term "lithium anode" or "lithium negative electrode" refers to anodes comprising lithium, including metallic lithium, lithium alloys, such as alloys of lithium with aluminum, mercury, zinc, and the like, and intercalation based anodes containing lithium such as those based on carbon, vanadium oxides tungsten oxides, and the like.

The term "electrolyte solvent" or simply "solvent" refers to the organic solvent used for the purpose of solubilizing salts during operation of electrochemical cells. The solvent can be any low voltage aprotic polar solvent. Preferably, these materials are characterized by a boiling point greater than about 85 °C. Suitable electrolyte solvents Include, for example, propylene carbonate, ethylene carbonate, dimethyl carbonate, diethyl carbonate, ethyl methyl carbonate, diethyl pyrocarbonate, 1,2-dimethoxyethane, 1,2-diethoxyethane, gamma-butyrolactone, tetrahydrofuran, 2-methyltetrahydrofuran, 1,3-dioxolane, 4-methyl-1,3-dioxolane, diethyl ether, sulfolane, acetonitrile, propionitrile, glutaronitrile, anisole, 1-methyl-2-pyrrolidinone, glyme, diglyme, triglyme, tetraglyme, dimethyl sulfoxide, and the like, or mixtures thereof. Preferred solvents include mixtures of organic carbonates.

The term "salt" refers to any ion conducting inorganic salt which is suitable for use In a non-aqueous electrolyte. Representative examples are alkali metal salts, In particular lithium salts, of less mobile anions of weak bases having a large anionic radius. Examples of such anions are I', Bf, SCN⁻, ClO₄⁻, BF₄⁻, PF₆⁻, AsF₆⁻, etc. Specific examples of suitable lithium salts include LiN(SO₂CF₃)₂, LiN(SO₂C₂F₅)₂, LiASF₆, LiPF₆, LiBF₄, LiB(C₆H₅)₄, LiCl, LiBr, Lil, CH₃SO₃Li, CF₃SO₃Li, LiClO₄, LiSCN, and the like.

### Electrode Active Materials

The present invention provides mixtures or blends of electrochemically active materials (herein "electrode active materials"). The term "blend" or "mixture" refers to a combination of two or more individual active materials In a physical mixture. Preferably, each individual active material in a blend retains Its Individual chemical composition after mixing under normal operating conditions, except such variation as may occur during substantially reversible cycling of the battery In which the material is used. Such mixtures comprise discrete regions, or particles, each comprising an active material with a given chemical composition, preferably a single active material. Preferably, the materials of this Invention comprise a substantially homogeneous distribution of particles.

The positive electrode active materials of the present invention include a blend of LNCO and LNMCO materials, which unexpectedly maintain high capacity while enhancing thermal stability of the cathode-electrolyte system. In the following formulae, LNCO materials are represented by the term LNM¹O where M¹ is at least one of Co or Al.

In an embodiment, the blend can be written as xLNMCO(1-x)LNM¹O where 0<*x*<1 and M¹ is at least one of Co or Al;
wherein LNMCO is Li_{(1+*y*)}M²_{(1-*y*)}O₂ where 0≤*y*≤0.9 and M² = Mn*ₐ*Ni*_{b}*Co*_{c}* where *a*+*b*+*c* = 1 and (1+*y*)/(1-*y*)- 1 ≤*a*≤1 and 0≤*b*/*c*≤100 for *c* not equal to 0, or *b* = 1-*a* for *c* = 0; and
wherein LNM¹O is selected from the group consisting of LiNi*ₒC*o*ₑ*O₂ where *d*+*e* =1 and 0≤*d*/*e*≤00 for *e* not equal to 0, or *d* =1 for *e* = 0; and LiNi*₁*-_{*(z*+*z')*}Co*_{z}*Al*_{z'}*O₂ where 0< *z*+*z'*<1.

In an alternative embodiment, the blend is xLNMCO(1-x)LNM¹O where 0<x<1 and M¹ is at least one of Co or Al;
wherein LNMCO is Li_{(1+*y*)}M²_{(1-*y*)}O₂ where 0≤*y*≤0.9 and M² = Mn*ₐ*Ni*_{b}*Co*_{c}* where *a*+*b*+*c*=1 and (1+*y*)/(1-*y*)-1≤*a*≤1 and 0<*b*/*c*≤100; and
wherein LNM¹O is selected from the group consisting of LiNi*_{d}*Co*ₑ*O*₂* where *d*+*e* =*1* and 0<*d*/*e*≤00; and LiNi_{*1*-(*z*+*z'*)}Co*_{z}*Al*_{z'}*O₂ where 0< *z*+*z'*<1.

A preferred LNMCO is LiNi_{1/3}Mn_{1/3}Co_{1/3}O₂ obtained from Argonne National Laboratory (Argonne, Illinois).

A preferred LNCO compound is LiNi_{0.8}Co_{0.2}O₂, available as "LNMCO-1" from BASF Catalysts, LLC (Iselin, New Jersey). Another useful LNCO is LiNi_{0.8}Co₀.₀₁₆Al_{0.05}O₂, available from Toda Kogyo, Hiroshima, Japan.

The inventive active cathode blends provide a useful layered structure. Also, the Inventive active cathode blends have a much lower manganese content .than other known lithium mixed metal oxides.

The following examples further illustrate the invention but, of course, should not be construed as in any way limiting its scope. In the examples the following organic solvent acronyms are used: ethylene carbonate (EC), dimethyl carbonate (DMC), and diethyl carbonate (DEC).

### EXAMPLE 1

Preparation of cathode active material slurries.

The following four active cathode material compositions were used.
1. LiNi_{1/3}Mn_{1/3}CO_{1/3}O₂ 100% (reference DR28)
2. LiNi_{1/3}Mn_{1/3}Co_{1/3}O₂ 75%, LNCO-125% (reference DR29)
3. LiNi_{1/3}Mn_{1/3}Co_{1/3}O₂25%, LNCO-1 75% (reference DR30)
4. LNCO-1 100% (reference DR31)

Reference samples DR29 and DR30 were prepared as active cathode material blends.

Exemplary cathode active slurry formulations were prepared using each reference material as shown in Table 1.

**TABLE 1**

| **Component** | **% of Solids** |
|---|---|
| PVDF¹ binder | 5 |
| Active Cathode Material | 89 |
| Super P² | 2 |
| SAB³ | 2 |
| KS-15⁴ | 2 |

| | % of Slurry |
|---|---|
| 1-methyl-2-pyrrolidinone (NMP solvent) | 50 |

| | |
|---|---|
| ¹ PVDF = polyvinyldifluoride binder ² Super P = battery grade carbon black ³ SAB = low surface area carbon black ⁴ KS-16 = graphitic carbon | |

### EXAMPLE 2

Preparation of positive electrode and test coin cells.

The positive electrode for each cathode active slurry formulation was prepared by coating the slurries on aluminum foil with an Adjustable Micron Film Applicator from Gardco (gap 12 mil), drying first in open air on an electric plate at 110 °C for 2 hours, and then In a vacuum oven at 110 °C for 40 hours. The dried materials were calendered to 104-108 µm (ref. DR28), 100-105 µm (ref. DR29), 108-110 µm (ref. DR30), and 89-95 µm (ref. DR31), respectively, of thickness that corresponded to *ca.* 75% of its original value. Electrodes of 0.5 Inch diameter were punched and weighed, and weight loading was calculated (108-110 mg/in²). Lithium metal ½-inch coin cells were made (batch of 3 for each reference material) as follows. Separator Setela (polyethylene film, 20 µm thickness) and Ferro electrolyte: 1M LIPF₆ In EC/DMC/DEC 1:1:1 (vol.) were used.

### EXAMPLE 3

Voltage cycling performance tests.

The coin cells were tested on a Maccor cycling instrument according to the following schedule within the voltage interval of 3V-4.2V: charge C/20 with taper at 4.2V to current C/200, discharge C/20, charge C/10 with taper at 4.2V to current C/100, discharge C/10, charge C/10 with taper at 4.2V to current C/100, stand for 18 hours.

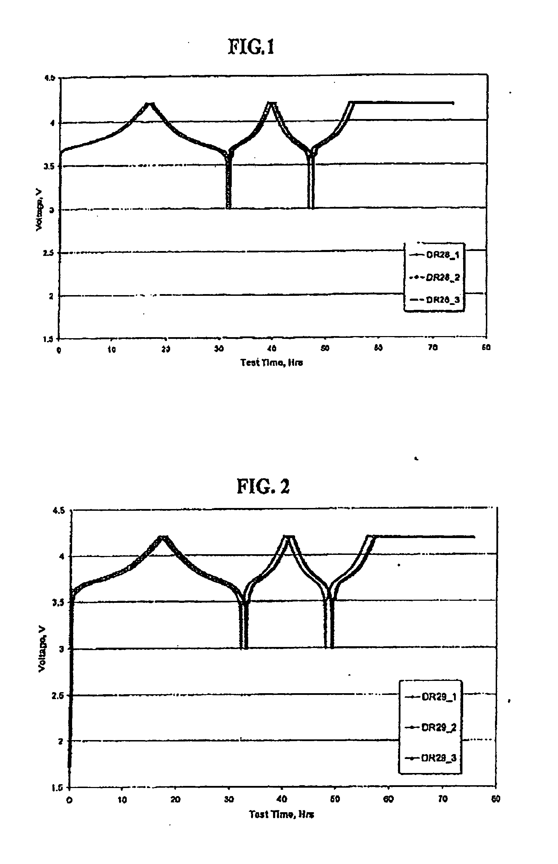

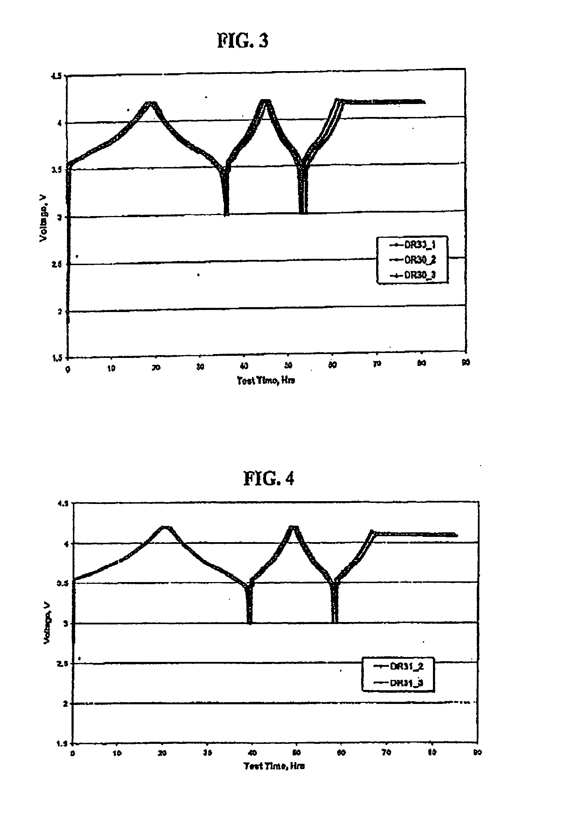

Figures 1-4 present the cycling voltage profiles for the coin cells made with reference materials DR28, DR29, DR30, and DR31. It should be noted that the cells prepared using active cathode material blends (DR29 cell and DR30 cell) provided acceptable voltage outputs compared to cells having cathodes made with LNCO-1 alone (DR31 cell).

### EXAMPLE 4

Specific Capacity tests.

The coin cells were tested to measure specific capacity (mAh/g) and cycle coulombic efficiency using the data from the cycling profiles. The results are tabulated In Table 2, where the following abbreviations apply for charge (Ch.), discharge (Dch.), and efficiency (Eff.).

**TABLE 2**

| | **DR28 cell** | | | **DR29 cell** | | | **DR30 cell** | | | **DR31 cell** | | |
|---|---|---|---|---|---|---|---|---|---|---|---|---|
| **Rate** | **Ch.** | **Dch.** | **Eff.** | **Ch.** | **Dch.** | **Eff.** | **Ch.** | **Dch.** | **Eff.** | **Ch.** | **Dch.** | **Eff.** |
| C/20 | 163.14 | 145.60 | 0.892 | 176.01 | 156.74 | 0.891 | 184.35 | 169.86 | 0.875 | 205.66 | 183.97 | 0.896 |
| C/10 | 146.42 | 143.12 | 0.977 | 157.66 | 153.89 | 0.976 | 170.62 | 167.22 | 0.980 | 185.23 | 180.35 | 0.974 |
| C/10 | 143.87 | | | 154.64 | | | 164.99 | | | 164.63 | | |

As shown In Table 2, the cells prepared using active cathode material blends (DR29 cell and DR30 cell) provided excellent specific capacities and efficiencies comparable to cells having cathodes made with LNCO-1 alone (DR31 cell). It was found that for the cells prepared using active cathode material blends (DR29 cell and DR30 cell) the discharge capacities are a linear combination of the discharge capacity of each material in the blend in proportion to the weight percent employed. Thus, the overall energy output of the DR29 and DR30 cathode blend cells was found to be high, while thermal stability was improved, as shown In Example 5.

### EXAMPLE 5

Thermal stability tests using Differential Scanning Calorimetry (DSC).

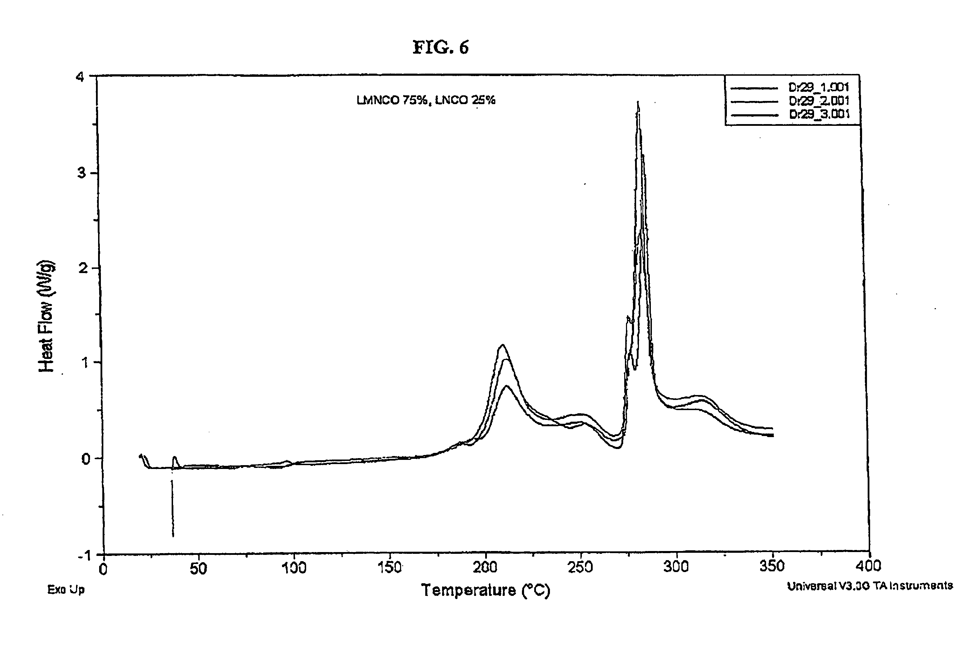

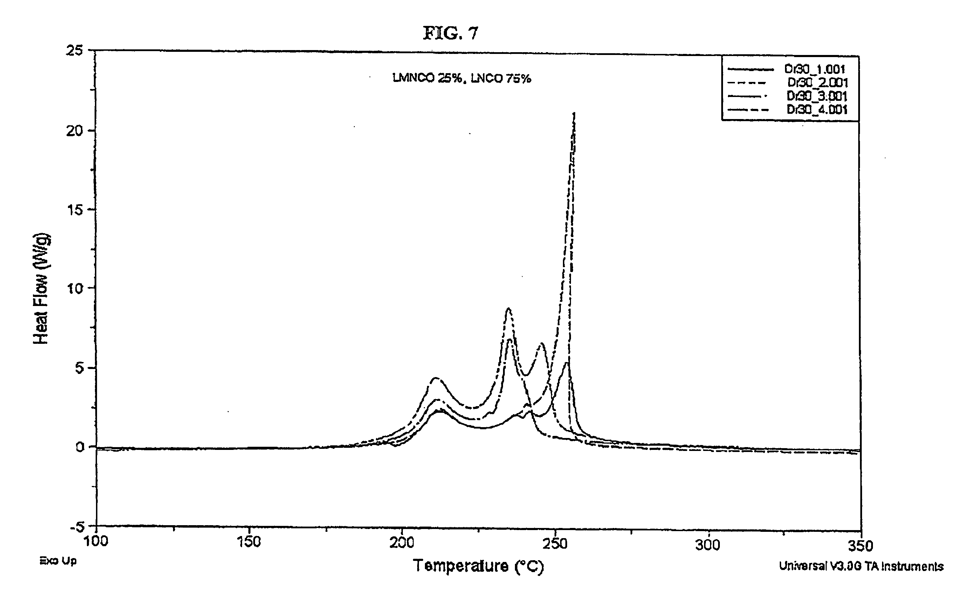

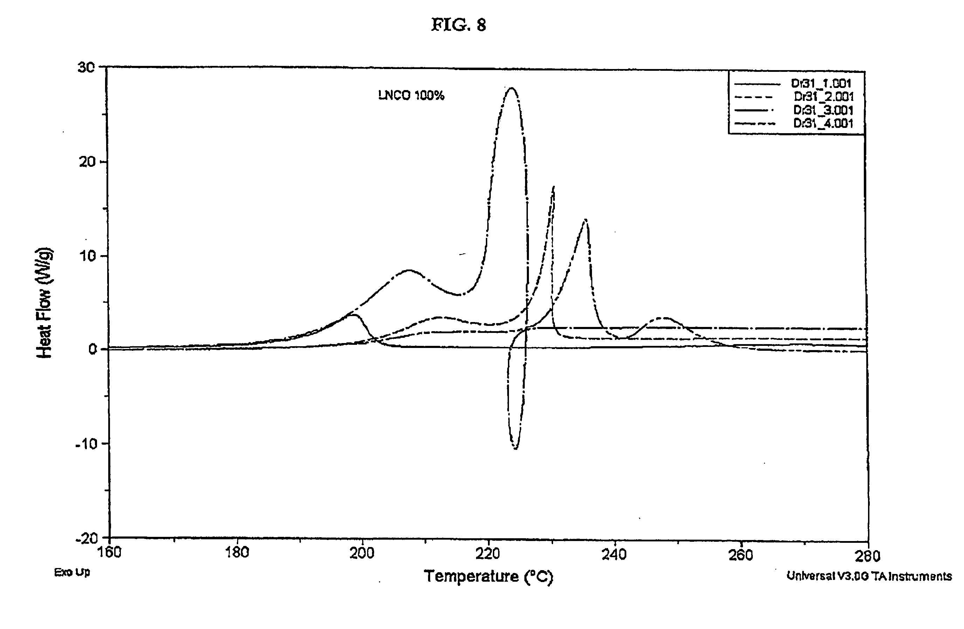

The coin cells prepared in Example 2, after the 18 hour charge stand of Example 3, were dismantled in a glove box. The charged cathodes were washed with solvent to remove electrolyte and binder, and then each cathode was mixed with electrolyte at a constant cathode/electrolyte weight ratio. These preparations were subjected to DSC using a TA Instruments Calorimeter Model 2010 (New Castle, Delaware). Figures 6 and 7, which test the cathode blends (DR29 and DR30) show a significant decrease In the exotherm at about 200 °C corresponding to the LNCO-1 cathode exotherm (Fig. 8).

Thus, as stated above, the overall energy output of the DR29 and DR30 cathode blend cells was found to be high, as shown In Example 4, while thermal stability was unexpectedly improved.

Further, in addition to the disclosed coin type battery, it is expected that a similar technical advantage can be obtained with any of the cylindrical or rectangular batteries.

As can be appreciated from the description of certain embodiments according to the present invention, it is possible to provide a non-aqueous electrolyte secondary battery having a high specific capacity, thus high energy density, high cycling efficiency, and good thermal stability.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar references in the context of describing the invention (especially in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is Intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. It should be understood that the illustrated embodiments are exemplary only, and should not be taken as limiting the scope of the invention.

## Claims

1. A positive electrode active material blend comprising xLNMCO(1-*x*)LNM¹O where 0<*x*<1 and M¹ is at least one of Co or Al;
wherein LNMCO is Li_{(1+*y*)}M²_{(1-*y*)}O₂ where 0≤*y*≤0.9 and M² = Mn*ₐ*Ni*_{b}*Co*_{c}* where *a*+*b*+*c* = 1 and (1+*y*)/(1-*y*) - 1≤*a*≤1 and 0<*b*/*c*≤100; and
wherein LNM¹O is selected from the group consisting of LilNi*_{d}*Co*ₑ*O₂ where *d*+*e* = 1 and 0<*d*/*e*≤100; and LiNi_{1-(*z*+*z'*)}CO*_{z}*Al*_{z}*O₂ where 0<*z*+*z'*<1.

2. The positive electrode material blend of claim 1 wherein LNM¹O is LiNi*_{d}*Co*ₑ*O₂ where *d*+*e* = 1 and O<*d*/*e*≤100.

3. The positive electrode material blend of claim 2 wherein LNM¹O is LiNi_{0.8}Co_{0.2}O₂.

4. The positive electrode material blend of claim 1 wherein LNMCO is Li_{(1.06)}(Ni_{1/3}Mn_{1/3}Co_{1/3})_{0.95}O₂.

5. The positive electrode material blend of claim 3 wherein LNMCO is Li_{(1.05)}(Ni_{1/3}Mn_{1/3}Co_{1/3})_{0.95}O₂.

6. The positive electrode material blend of claim 5 wherein x is from about 0.25. to about 0.75.

7. The positive electrode material blend of claim 1 wherein LNM¹O is LiNi_{1-(*z*+*z'*)}Co*_{z}*Al*_{z'}*O₂ where 0<*z*+*z'*<1.

8. The positive electrode material blend of claim 7 wherein LNM¹O is LiNi_{0.8}Co_{0.15}Al_{0.05}O₂.

9. A non-aqueous electrolyte lithium secondary battery comprising a positive electrode, a negative electrode, and a non-aqueous electrolyte, wherein the positive electrode comprises a positive electrode active material blend according to claim 1;
wherein the electrolyte preferably comprises a solvent selected from the group consisting of propylene carbonate, ethylene carbonate, dimethyl carbonate, diethyl carbonate, ethyl methyl carbonate, diethyl pyrocarbonate, 1,2-dimethoxyethane, 1,2-diethoxyethane, gamma-butyrolactone, tetrahydrofuran, 2-methyltetrahydrofuran, 1,3-dioxolane, 4-methyl-1,3-dioxolane, diethyl ether, sulfolane, acetonitrile, propionitrile, glutaronitrile, anisole, 1-methyl-2-pyrrolidinone, and mixtures thereof; and
wherein the electrolyte preferably comprises a salt selected from the group consisting of LiN(SO₂CF₃)₂, LiN(SO₂C₂F₅)₂, LiASF₆, LiPF₆, LiBF₄, LiB(C₆H₅)₄, LiCl, LiBr, LiI, CH₃SO₃Li, CF₃SO₃Li, LiClO₄, and LiSCN.

10. The non-aqueous electrolyte lithium secondary battery of claim 9 wherein the negative electrode comprises lithium metal.

11. The non-aqueous electrolyte lithium secondary battery of claim 9 wherein LNM¹O is LiNi*_{d}*Co*ₑ*O₂ where *d*+*e* = 1 and 0<*d*/*e*≤100.

12. The non-aqueous electrolyte lithium secondary battery of claim 11 wherein LNM¹O is LiNi_{0.8}Co_{0.2}O₂.

13. The non-aqueous electrolyte lithium secondary battery of claim 9 wherein LNMCO is Li_{(1.05)}(Ni_{1/3}Mn_{1/3}Co_{1/3})_{0.95}O₂.

14. The non-aqueous electrolyte lithium secondary battery of claim 12 wherein LNMCO is Li_{(1.05)}(Ni_{1/3}Mn_{1/3}Co_{1/3})_{0.95}O₂.

15. The non-aqueous electrolyte lithium secondary battery of claim 14 wherein x is from about 0.25 to about 0.75.

## Patentansprüche

1. Aktivmassenmischung für positive Elektroden, umfassend xLNMCO(1-x)LNM¹O, wobei 0<x<1 und M^{1·} für Co und/oder Al steht;
wobei LNMCO für Li_{(1+*y*)}M²_{(1-*y*)}O₂ steht, wobei 0≤*y*≤0,9 und M² = Mn*ₐ*Ni*_{b}*Co*_{c}*, wobei *a*+*b*+*c* = 1 und (1+*y*)/(1-*y*) - 1≤*a*≤1 und 0<*b*/*c*≤100; und
wobei LNM¹O aus der Gruppe bestehend aus LiNi*_{d}*Co*ₑ*O₂, wobei *d*+*e* = 1 und 0<*d*/*e*≤100, und LiNi_{1-(*z*+*z'*)}Co*_{z}*Al*_{z'}*O₂, wobei 0<*z*+*z'*<1, ausgewählt ist.

2. Massenmischung für positive Elektroden nach Anspruch 1, wobei LNM¹O für LiNi*_{d}*Co*ₑ*O₂ steht, wobei *d*+*e* = 1 und 0<*d*/*e*≤100.

3. Massenmischung für positive Elektroden nach Anspruch 2, wobei LNM¹O für LiNi_{0,8}Co_{0,2}O₂ steht.

4. Massenmischung für positive Elektroden nach Anspruch 1, wobei LNMCO für Li_{(1,06)}(Ni_{1/3}Mn_{1/3}Co_{1/3})_{0,95}O₂ steht.

5. Massenmischung für positive Elektroden nach Anspruch 3, wobei LNMCO für Li_{(1,05)}(Ni_{1/3}Mn_{1/3}Co_{1/3})_{0,95}O₂ steht.

6. Massenmischung für positive Elektroden nach Anspruch 5, wobei x etwa 0,25 bis etwa 0,75 beträgt.

7. Massenmischung für positive Elektroden nach Anspruch 1, wobei LNM¹O für LiNi_{1-(*z*+*z'*)}CO*_{z}*Al*_{z'}*O₂, wobei 0<*z*+*z'*<1, steht.

8. Massenmischung für positive Elektroden nach Anspruch 7, wobei LNM¹O für LiNi_{0,8}Co_{0,15}Al_{0,05}O₂ steht.

9. Lithiumsekundärbatterie mit nichtwässrigem Elektrolyt, umfassend eine positive Elektrode, eine negative Elektrode und einen nichtwässrigen Elektrolyt, wobei die positive Elektrode eine Aktivmassenmischung für positive Elektroden gemäß Anspruch 1 umfasst;
wobei der Elektrolyt vorzugsweise ein Lösungsmittel ausgewählt aus der Gruppe bestehend aus Propylencarbonat, Ethylencarbonat, Dimethylcarbonat, Diethylcarbonat, Ethylmethylcarbonat, Diethylpyrocarbonat, 1,2-Dimethoxyethan, 1,2-Diethoxyethan, gamma-Butyrolacton, Tetrahydrofuran, 2-Methyltetrahydrofuran, 1,3-Dioxolan, 4-Methyl-1,3-dioxolan, Diethylether, Sulfolan, Acetonitril, Propionitril, Glutaronitril, Anisol, 1-Methyl-2-pyrrolidinon und Mischungen davon umfasst und
wobei der Elektrolyt vorzugsweise ein Salz ausgewählt aus der Gruppe bestehend aus LiN(SO₂CF₃)₂, LiN(SO₂C₂F₅)₂, LiAsF6, LiPF₆, LiBF₄, LiB(C₆H₅)₄, LiCl, LiBr, LiI, CH₃SO₃Li, CF₃SO₃Li, LiClO₄ und LiSCN umfasst.

10. Lithiumsekundärbatterie mit nichtwässrigem Elektrolyt nach Anspruch 9, wobei die negative Elektrode Lithiummetall umfasst.

11. Lithiumsekundärbatterie mit nichtwässrigem Elektrolyt nach Anspruch 9, wobei LNM¹O für LiNi*_{d}*CoₑO₂ steht, wobei *d*+*e* = 1 und 0<*d*/*e*≤100.

12. Lithiumsekundärbatterie mit nichtwässrigem Elektrolyt nach Anspruch 11, wobei LNM¹O für LiNi_{0,8}Co_{0,2}O₂ steht.

13. Lithiumsekundärbatterie mit nichtwässrigem Elektrolyt nach Anspruch 9, wobei LNMCO für Li_{(1,05)}(Ni_{1/3}Mn_{1/3}Co_{1/3})_{0,95}O₂ steht.

14. Lithiumsekundärbatterie mit nichtwässrigem Elektrolyt nach Anspruch 12, wobei LNMCO für Li_{(1,05)}(Ni_{1/3}Mn_{1/3}Co_{1/3})_{0,95}O₂ steht.

15. Lithiumsekundärbatterie mit nichtwässrigem Elektrolyt nach Anspruch 14, wobei *x* etwa 0,25 bis etwa 0,75 beträgt.

## Revendications

1. Mélange de matériaux actifs pour électrode positive comprenant xLNMCO(1-x)LNM¹O où 0 < x < 1 et M¹ représente Co et/ou Al ;
dans lequel LNMCO représente Li_{(1+y)}M²_{(1-y)}O₂ où 0 ≤ y ≤ 0,9 et M² = MnₐNi_{b}Co_{c} où a + b + c = 1 et (1+y)/(1-y) - 1 ≤ a ≤ 1 et 0 < b/c ≤ 100 ; et
dans lequel LNM¹O est choisi dans le groupe constitué par LiNi_{d}CoₑO₂ où d + e = 1 et 0 < d/e ≤ 100 ; et LiNi_{1-(z+z')}CO_{z}Al_{z'}O₂ où 0 < z + z' < 1.

2. Mélange de matériaux pour électrode positive selon la revendication 1 dans lequel LNM¹O représente LiNi_{d}CoₑO₂ où d + e = 1 et 0 < d/e ≤ 100.

3. Mélange de matériaux pour électrode positive selon la revendication 2 dans lequel LNM¹O représente LiNi_{0,8}Co_{0,2}O₂.

4. Mélange de matériaux pour électrode positive selon la revendication 1 dans lequel LNMCO représente Li_{1,05}(Ni_{1/3}Mn_{1/3}Co_{1/3})_{0,95}O₂.

5. Mélange de matériaux pour électrode positive selon la revendication 3 dans lequel LNMCO représente Li_{1,05}(Ni_{1/3}Mn_{1/3}Co_{1/3})_{0,95}O₂.

6. Mélange de matériaux pour électrode positive selon la revendication 5 dans lequel x va d'environ 0,25 à environ 0,75.

7. Mélange de matériaux pour électrode positive selon la revendication 1 dans lequel LNM¹O représente LiNi_{1-(z+z')}Co_{z}Al_{z'}O₂ où 0 < z + z' < 1.

8. Mélange de matériaux pour électrode positive selon la revendication 7 dans lequel LNM¹O représente LiNi_{0,8}Co_{0,15}Al_{0,05}O₂.

9. Batterie rechargeable au lithium à électrolyte non aqueux comprenant une électrode positive, une électrode négative, et un électrolyte non aqueux, l'électrode positive comprenant un mélange de matériaux actifs pour électrode positive selon la revendication 1 ;
dans laquelle l'électrolyte comprend de préférence un solvant choisi dans le groupe constitué par le carbonate de propylène, le carbonate d'éthylène, le carbonate de diméthyle, le carbonate de diéthyle, le carbonate d'éthylméthyle, le pyrocarbonate de diéthyle, le 1,2-diméthoxyéthane, le 1,2-diéthoxyéthane, la gamma-butyrolactone, le tétrahydrofurane, le 2-méthyltétrahydrofurane, le 1,3-dioxolane, le 4-méthyl-1,3-dioxolane, l'éther diéthylique, le sulfolane, l'acétonitrile, le propionitrile, le glutaronitrile, l'anisole, la 1-méthyl-2-pyrrolidone, et les mélanges de ceux-ci ; et
dans laquelle l'électrolyte comprend de préférence un sel choisi dans le groupe constitué par LiN(SO₂CF₃)₂, LiN(SO₂C₂F₅)₂, LiASF₆, LiPF₆, LiBF₄, LiB(C₆H₅)₄, LiCl, LiBr, LiI, CH₃SO₃Li, CF₃SO₃Li, LiClO₄, et LiSCN.

10. Batterie rechargeable au lithium à électrolyte non aqueux selon la revendication 9 dans laquelle l'électrode négative comprend du lithium métallique.

11. Batterie rechargeable au lithium à électrolyte non aqueux selon la revendication 9 dans laquelle LNM¹O représente LiNi_{d}CoₑO₂ où d + e = 1 et 0 < d/e ≤ 100.

12. Batterie rechargeable au lithium à électrolyte non aqueux selon la revendication 11 dans laquelle LNM¹O représente LiNi_{0,8}Co_{0,2}O₂.

13. Batterie rechargeable au lithium à électrolyte non aqueux selon la revendication 9 dans laquelle LNMCO représente Li_{(1,05)}(Ni_{1/3}Mn_{1/3}Co_{1/3})_{0,95}O₂.

14. Batterie rechargeable au lithium à électrolyte non aqueux selon la revendication 12 dans laquelle LNMCO représente Li_{1,05} (Ni_{1/3}Mn_{1/3}CO_{1/3})_{0,95}O₂.

15. Batterie rechargeable au lithium à électrolyte non aqueux selon la revendication 14 dans laquelle x va d'environ 0,25 à environ 0,75.
